Europäisches Patentamt

European Patent Office

Office européen des brevets

(19)

(11) Veröffentlichungsnummer: **0 062 628**
**B1**

(12) **EUROPÄISCHE PATENTSCHRIFT**

(45) Veröffentlichungstag der Patentschrift:
19.09.84

(51) Int. Cl.³: **C 02 F 11/12**

(21) Anmeldenummer: **82890048.0**

(22) Anmeldetag: **01.04.82**

(54) **Kontinuierlich arbeitende Entwässerungseinrichtung.**

(30) Priorität: **08.04.81 AT 1626/81**

(43) Veröffentlichungstag der Anmeldung:
**13.10.82 Patentblatt 82/41**

(45) Bekanntmachung des Hinweises auf die Patenterteilung:
**19.09.84 Patentblatt 84/38**

(84) Benannte Vertragsstaaten:
**BE CH DE FR GB IT LI LU NL SE**

(56) Entgegenhaltungen:
**AT - B - 245 506**
**DE - A - 2 800 689**

**Rivet "Guide de la Séparation Liquide-Solide" Société Française de Filtration, 1981, S. 177**

(73) Patentinhaber: **VOEST-ALPINE Aktiengesellschaft, Friedrichstrasse 4, A-1011 Wien (AT)**

(72) Erfinder: **Lichtenegger, Franz, Fronleichnamsweg 9, A-8940 Liezen (AT)**

(74) Vertreter: **Kretschmer, Adolf, Dipl.-Ing. et al, Schottengasse 3a, A-1014 Wien (AT)**

**Beschreibung**

Die Erfindung bezieht sich auf eine kontinuierlich arbeitende Schlamm-Entwässerungseinrichtung mit einem Schneckenförderer, einer als Innenfilter wirkenden Siebtrommel mit verstellbarer Neigung ihrer Achse, deren untere Stirnseite zumindest über die radiale Höhe des Schneckenganges geschlossen ausgebildet ist, einem in die Trommel führenden Rohr zur Schlammaufgabe und je einem Austrag für den Schlamm sowie das Filtratwasser, wobei die Schlammaufgabe am unteren Ende der Siebtrommel und der Schlammaustrag am oberen Ende derselben angeordnet ist.

Eine derartige Einrichtung ist beispielsweise der DE-A-2 800 669 oder Rivet »Guide de la Separation Liquide-Solide« Societé Francaise de Filtration, 1981, Seite 177, Fig. V.2.13, zu entnehmen. Die bei diesen Ausbildungen drehbar gelagerte Förderschnecke schiebt das zu entwässernde Gut entlang der Erzeugenden des Trommelmantels von der Aufgabe zum Schlammaustrag.

Derartige Einwässerungseinrichtungen sind insbesondere für die Vorentwässerung von Schlamm geeignet, welcher in der Folge in Filterpressen weiter entwässert wird. Das Verdichten des Schlammkuchens in Filterpressen darf nur mit begrenzter Geschwindigkeit erfolgen, um einen entsprechenden Flüssigkeitsablauf zu gewährleisten. Es wurden daher schon eine Reihe von Einrichtungen entwickelt, mit welchen eine möglichst große Wassermenge bereits vor der Filterpresse abgeschieden werden kann.

Derartige Vorentwässerungseinrichtungen vor einer nachgeschalteten Filterpresse sind bisher beispielsweise als Spaltsieb oder als Trommelvorentwässerungen ausgebildet worden. Bei den sogenannten Trommelzellenfiltern sind bereits Ausbildungen bekannt geworden, bei welchen die Trommel als Innenfilter verwendet wird. Das zu filternde Material wird in das Innere der Trommel eingebracht und von der Innenseite der Trommel durch Schaber abgekratzt.

Die Erfindung zielt nun darauf ab, eine einfache Vorentwässerungseinrichtung der eingangs genannten Art zu schaffen, mit welcher eine hohe Entwässerungsleistung bei hohem Durchsatz gewährleistet ist. Im besonderen zielt die Erfindung darauf ab, den Durchsatz und die Entwässerungsleistung in einfacher Weise an die anfallenden Schlammengen anzupassen. Zur Lösung dieser Aufgabe besteht die Erfindung im wesentlichen darin, daß das Schlammzuführungsrohr axial in der Siebtrommel angeordnet und in seiner Neigung zur Horizontalen verstellbar gelagert ist, daß die Siebtrommel am Schlammzuführungsrohr drehbar gelagert und mit einem Drehantrieb ausgestattet ist und daß an der Innenseite der Trommel ein sich über deren gesamte axiale Länge erstreckender Schneckengang vorgesehen ist. Dadurch, daß das Schlammzuführungsrohr in seiner Neigung verstellbar ist, kann in einfacher Weise den für den jeweiligen Schlamm geltenden günstigen Entwässerungsbedingungen Rechnung getragen werden. Der über den rohrförmigen Siebkörper der Trommel durchgehende Schneckengang bewirkt die Förderung des Schlammes von unten nach oben, wobei der Schlamm ständig umgeschichtet und dadurch besonders gut entwässert werden kann. Das Filtratwasser kann in eine unterhalb der Filtrattrommel angeordnete Sammeltasse abfließen und aus dieser abgeleitet werden.

Eine weitere Anpassung der Entwässerungsleistung an den Schlammanfall kann dadurch erreicht werden, daß der Drehantrieb der Trommel drehzahlvariabel, insbesondere mit einem verstellbaren Getriebe, ausgebildet ist. In Kombination mit der einstellbaren Neigung des Schlammzuführungsrohres wird auf diese Weise bei hohem Durchsatz den Erfordernissen verschiedener Schlammarten besonders einfach Rechnung getragen.

In vorteilhafter Weise ist die Ausbildung so getroffen, daß sich der Schneckengang radial vom Trommelmantel einwärts über einen Teil des Trommelradius erstreckt. Eine derartige Ausbildung erlaubt in besonders einfacher Weise zusätzliche Einrichtungen für die Reinigung der Siebtrommel, sowie für die Ableitung des für die Reinigung der Siebtrommel erforderlichen Spritzwassers. Gemäß einer bevorzugten Weiterbildung der Erfindung ist die Ausbildung hierbei so getroffen, daß oberhalb der Siebtrommel Spritzwassersprühdüsen, vorzugsweise in einem zur Drehachse parallelen Düsenstock, angeordnet sind, wobei in vorteilhafter Weise innerhalb der Trommel eine mit dem Schlammzuführungsrohr starr verbundene Spritzwassersammeltasse angeordnet ist, deren Ablauf die untere Stirnwand der Trommel durchsetzt. Während somit das Filtratwasser bei der als Innenfilter wirkenden Siebtrommel radial von innen nach außen durchtritt, erfolgt die Reinigung mit dem Spritzwasser von außen nach innen, so daß Verstopfungen der Siebtrommel bzw. des Filtergewebes leicht beseitigt werden können.

In konstruktiv einfacher Weise ist die Ausbildung hierfür so getroffen, daß das Schlammzuführungsrohr nahe seinem unteren Ende innerhalb der Trommel angeordnete radiale, vorzugsweise nach unten gerichtete Schlammaufgabeschlitze aufweist, und durch eine untere Stirnwand abgeschlossen ist, wodurch eine einfache Lagerung der Siebtrommel am Schlammzuführungsrohr ermöglicht wird, und das Spritzwasser im wesentlichen axial aus der Trommel wieder abgeleitet werden kann. Für die Ableitung des Spritzwassers, welches zum Zweck der Reinigung der Siebtrommel verwendet wird, ist vorteilhafter Weise die das Schlammzuführungsrohr abschließende Stirnwand innerhalb der Trommel angeordnet, und die Spritzwassersammeltasse über radiale Durchtrittsöffnungen mit dem der Stirnwand benachbarten Bereich des

Schlammzuführungsrohres verbunden, welches am unteren Ende der Trommel und außerhalb derselben mündet. Die Lagerung der Trommel kann auf diese Weise unmittelbar außen am Schlammzuführungsrohr erfolgen, wodurch die Verstellung der Neigung der Trommel durch Verstellung der Neigung des Schlammzuführungsrohres in einfacher Weise bewerkstelligt werden kann.

Um die mechanische Beanspruchung der Filtertrommel, insbesondere des Siebgewebes, so gering wie nur möglich zu halten und einen guten Trenneffekt sicherzustellen, können die Windungen des Schneckenganges gelenkig mit der Trommel verbunden sein, wodurch ein zusätzlicher Walkeffekt eintritt. Zu diesem Zweck ist die Ausbildung vorzugsweise so getroffen, daß die Siebtrommel einen aus achsparallelen Stäben gebildeten Tragkörper aufweist, über welchen ein Siebtuch bzw. ein Siebgewebe gespannt ist, und daß die Windungen des Schneckenganges mit dem Siebgewebe und/oder den Stäben verschraubt oder vernietet sind.

Die Erfindung wird nachfolgend an Hand eines in der Zeichnung dargestellten Ausführungsbeispieles näher erläutert. In dieser zeigt

Fig. 1 eine schematische Seitenansicht der erfindungsgemäßen Entwässerungseinrichtung,

Fig. 2 eine schematische Ansicht der Entwässerungstrommel in Richtung der Rohrachse und

Fig. 3 eine vergrößerte Darstellung der Festlegung des Schneckengewindes an der Innenseite der Trommel.

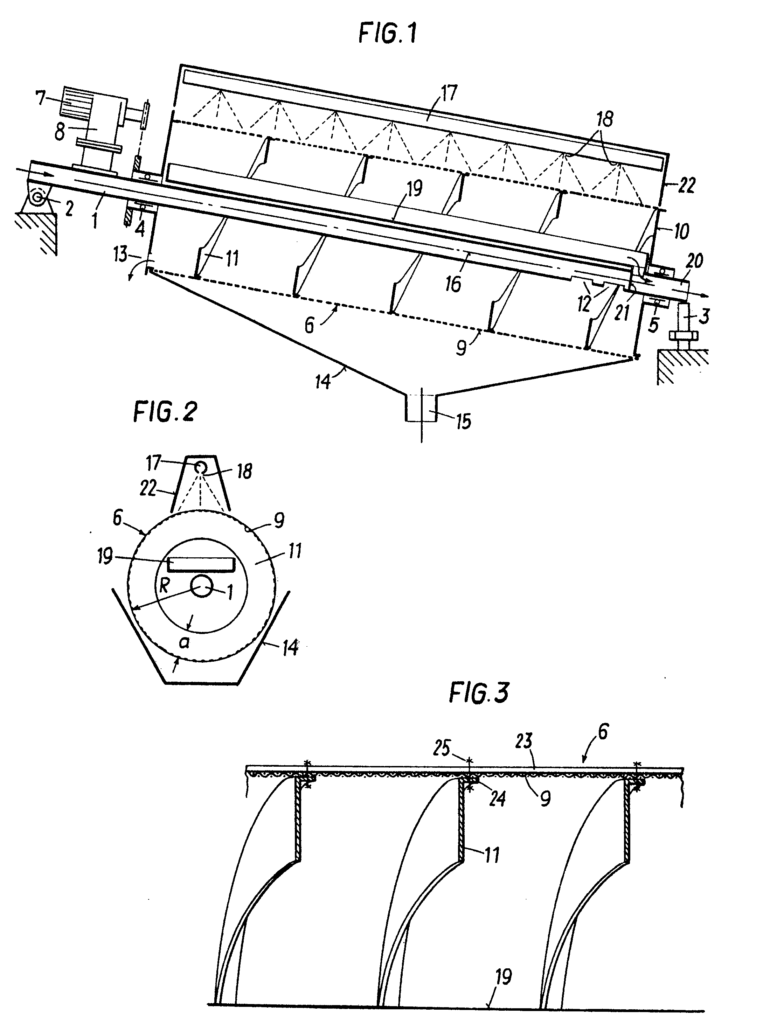

In Fig. 1 ist ein Schlammzuführungsrohr 1 an einer Anlenkachse 2 in Höhenrichtung schwenkbar und unverdrehbar angeordnet. Das untere Ende des Schlammzuführungsrohres 1 ist an einem höhenverstellbaren Lagerbock 3 abgestützt. An dem Schlammzuführungsrohr 1 ist über Lager 4 und 5 eine Siebtrommel 6 drehbar gelagert, wobei der mit dem Schlammzuführungsrohr 1 starr verbundene Antriebsmotor 7 unter Zwischenschaltung eines Getriebes 8 den Drehantrieb der Trommel 6 darstellt. Die Trommel 6 weist über ihren Umfang ein Siebgewebe 9 auf. Die untere Stirnwand 10 der Trommel ist geschlossen ausgebildet. Über den inneren Umfang der Trommel sind Gewindegänge 11 einer Förderschnecke angeordnet, welche den über nach unten gerichtete radiale Schlitze 12 des Schlammzuführungsrohres 1 in das Innere der Trommel 6 eindringenden Schlamm in Richtung zum Schlammaustritt 13 fördern. Unterhalb der Siebtrommel 6 ist eine Filtratwasserauffangtasse 14 mit einem Filtratwasserablauf 15 angeordnet. An einem im wesentlichen parallel zur Rohrachse 16 angeordneten Düsenstock 17 sind Spritzwasserdüsen 18 vorgesehen, welche das Siebgewebe 9 der Trommel 6 reinigen. Das Filtratwasser gelangt im Inneren der Trommel 6 in eine Spritzwasserauffangtasse 19, deren Ablauf 20 vom Schlammzulaufrohr 1 gebildet ist. Hierfür weist das Schlammzulaufrohr 1 nach den Schlitzen 12 eine Stirn- bzw. Trennwand 21 auf, und die Spritzwasserauffangtasse 19 mündet über radiale Durchtrittsöffnungen des Rohres 1 nach der Stirnwand 21 in das Schlammzulaufrohr 1.

In Fig. 2 ist ersichtlich, daß die Schneckengänge sich radial vom durch das Siebgewebe 9 gebildeten Mantel der Trommel einwärts nur über einen Teil des Radius R der Siebtrommel erstrecken. Die radiale Höhe des Schneckenganges a ist so bemessen, daß der Schneckengang die Spritzwasserauffangtasse 19 ohne Kollision umgreift. Im übrigen sind in Fig. 2 die Bezugszeichen der Fig. 1 beibehalten, wobei zusätzlich ein den Düsenstock 17 umgreifender Spritzschirm 22 ersichtlich ist.

In Fig. 3 ist die Befestigung des Siebgewebes mit dem Schneckengang sowie der Aufbau der Trommel schematisch im Längsschnitt dargestellt. Achsparallele Stäbe 23 bilden den Tragkörper der Trommel 6 aus. Das Siebgewebe 9 wird unter Vermittlung der Befestigungsstege 24 der Gewindegänge 11 der Förderschnecke an den Längsstäben 23 durch Schrauben oder Nieten 25 festgelegt. Bei dieser Konstruktion bleibt eine Deformierbarkeit möglich, ohne daß dies gleich zu einem Bruch der Verankerung der Schnecke oder zu einer Überbeanspruchung des Siebgewebes führt.

## Patentansprüche

1. Kontinuierlich arbeitende Schlamm-Entwässerungseinrichtung mit einem Schneckenförderer, einer als Innenfilter wirkenden Siebtrommel (6) mit verstellbarer Neigung ihrer Achse, deren untere Stirnseite zumindest über die radiale Höhe des Schneckenganges geschlossen ausgebildet ist, einem in die Trommel führenden Rohr (1) zur Schlammaufgabe und je einem Austrag (13) für den Schlamm sowie das Filtratwasser, wobei die Schlammaufgabe (12) am unteren Ende der Siebtrommel (6) und der Schlammaustrag (13) am oberen Ende derselben angeordnet ist, dadurch gekennzeichnet, daß das Schlammzuführungsrohr (1) axial in der Siebtrommel (6) angeordnet und in seiner Neigung zur Horizontalen verstellbar gelagert ist, daß die Siebtrommel (6) am Schlammzuführungsrohr (1) drehbar gelagert und mit einem Drehantrieb (7) ausgestattet ist und daß an der Innenseite der Trommel (6) ein sich über deren gesamte axiale Länge erstreckender Schneckengang (11) vorgesehen ist.

2. Entwässerungseinrichtung nach Anspruch 1, dadurch gekennzeichnet, daß der Drehantrieb (7) der Trommel (6) drehzahlvariabel, vorzugsweise mit einem verstellbaren Getriebe (8), ausgebildet ist.

3. Entwässerungseinrichtung nach Anspruch 1 oder 2, dadurch gekennzeichnet, daß sich der Schneckengang (11) radial vom Trommelmantel einwärts über einen Teil des Trommelradius erstreckt.

4. Entwässerungseinrichtung nach einem der Ansprüche 1, 2 oder 3, dadurch gekennzeichnet, daß oberhalb der Siebtrommel (6) Spritzwassersprühdüsen (18), vorzugsweise in einem der Drehachse (16) parallelen Düsenstock (17), angeordnet sind.

5. Entwässerungsvorrichtung nach Anspruch 4, dadurch gekennzeichnet, daß innerhalb der Trommel (6) eine mit dem Schlammzuführungsrohr (1) starr verbundene Spritzwassersammeltasse (19) angeordnet ist, deren Ablauf (20) die untere Stirnwand (10) der Trommel durchsetzt.

6. Entwässerungseinrichtung nach einem der Ansprüche 1 bis 5, dadurch gekennzeichnet, daß das Schlammzuführungsrohr (1) nahe seinem unteren Ende innerhalb der Trommel (6) angeordnete radiale, vorzugsweise nach unten gerichtete Schlammaufgabeschlitze (12) aufweist, und durch eine untere Stirnwand (21) abgeschlossen ist.

7. Entwässerungseinrichtung nach einem der Ansprüche 4 bis 6, dadurch gekennzeichnet, daß die das Schlammzuführungsrohr (1) abschließende Stirnwand (21) innerhalb der Trommel (6) angeordnet ist, und daß die Spritzwassersammeltasse (19) über radiale Durchtrittsöffnungen mit dem der Stirnwand (21) benachbarten Bereich des Schlammzuführungsrohres (1) verbunden ist, welches am unteren Ende der Trommel (6) und außerhalb derselben mündet.

8. Entwässerungseinrichtung nach einem der Ansprüche 1 bis 7, dadurch gekennzeichnet, daß die Siebtrommel (6) einen aus achsparallelen Stäben (23) gebildeten Tragkörper aufweist, über welchen ein Siebtuch bzw. ein Siebgewebe (9) gespannt ist, und daß die Windungen (11) des Schneckenganges mit dem Siebgewebe (9) und/oder den Stäben (23) verschraubt oder vernietet sind.

## Claims

1. Continuously running mud dehydration apparatus, comprising a screw conveyor, a sieve drum (6) acting as internal filter, having an axis of adjustable inclination and having a lower face side which is closed at least over the radial height of the screw blade, a mud feeding tube (1) extending into the drum, and one discharge means (13) each for the mud and for the clarified water, resp., the mud input means (12) being arranged at the lower end of the sieve drum (6) and the mud discharge means (13) being arranged at the upper end of the sieve drum (6), characterized in that the mud feeding tube (1) is arranged axially within the sieve drum (6) and its inclination is adjustable with respect to a horizontal plane, that the sieve drum (6) runs on bearings on the mud feeding tube (1) and is provided with a drive unit (7), and that a screw blade (11) is provided at the inner side of the sieve drum (6) extending along the full length thereof.

2. Dehydration apparatus as claimed in claim 1, characterized in that the drive unit (7) of the sieve drum (6) is designed for variable rpm, preferably with a change gear (8).

3. Dehydration apparatus as claimed in claim 1 or 2, characterized in that the screw blade (11) extends radially inwardly from the drum shell over part of the drum radius.

4. Dehydration apparatus as claimed in any one of claim 1, 2 and 3, characterized in that above the sieve drum (6) water spray nozzles (18), preferably in a nozzle connection extending in parallel with the axis (16) of rotation, are provided.

5. Dehydration apparatus as claimed in claim 4, characterized in that within the sieve drum (6) and rigidly connected to the mud feeding tube (1) a spray water collecting trough (19) is arranged whose drain (20) extends through the lower face plate (10) of the sieve drum.

6. Dehydration apparatus as claimed in any one of claims 1 to 5, characterized in that the mud feeding tube (5) at its lower end within the sieve drum (6) has radial, preferably downwardly directed mud input slots (12) and is closed by a face plate (21).

7. Dehydration apparatus as claimed in any one of claims 4 to 6, characterized in that the face plate (21) closing the mud feeding tube (1) is located within the sieve drum (6) and that the spray water collecting trough (19) communicates via radial openings with the area of the mud feeding tube (1) adjacent the face plate (21), said mud feeding tube opening at the lower end of the sieve drum (6) and outside thereof.

8. Dehydration apparatus as claimed in any one of claims 1 to 7, characterized in that the sieve drum (6) has a supporting body made of rods (23) extending in parallel with the axis, a sieve cloth or sieve netting (9) stretching over said supporting body, and that the convolutions (11) of the screw blade are bolted or riveted with the sieve netting (9) and/or the rods (23).

## Revendications

1. Dispositif de déshydration des gadoues en marche continue, comportant une vis transporteuse, un tambour de filtrage (6) qui fonctionne comme filtre interne et comporte un axe de rotation d'inclinaison variable, ainsi qu'à son extrémité inférieure une face qui est fermée au moins sur la hauteur de la rampe hélicoïdale de la vis d'Archimède, un tube d'arrivée (1) débouchant à l'intérieur du tambour (6) pour y amener les gadoues à traiter, un orifice de débit (12) à l'extrémité inférieure du tambour (6) pour les gadoues à traiter, un orifice de sortie (13) des gadoues traitées à l'extrémité supérieure du tambour, et en outre un orifice d'évacuation (15) pour l'eau filtrée, caractérisé en ce que le tube d'arrivée des gadoues (1) est monté suivant l'axe du tambour de filtrage (6) avec une inclinaison réglable par rapport à l'horizontale, que le tambour de filtrage (6) est monté à rotation sur le tube d'arrivée des gadoues (1), et associé à un système d'entraînement en rotation (7), et qu'une rampe hélicoïdale (11) est disposée intérieurement sur la paroi du tambour (6), en s'étendant sur toute la longueur de celui-ci.

2. Dispositif de déshydratation selon la revendication 1, caractérisé en ce que le système (7) d'entraînement en rotation du tambour (6) est un système à vitesse variable, comportant de préférence un réducteur (8) à rapport variable.

3. Dispositif de déshydratation selon l'une des revendications 1 ou 2, caractérisé en ce que la rampe hélicoïdale (11) de la vis transporteuse s'étend dans le sens radial vers l'intérieur du tambour (6), à partir de la paroi de celui-ci, sur une partie du rayon du tambour.

4. Dispositif de déshydratation selon l'une des revendications 1 à 3, caractérisé en ce qu'il comporte des gicleurs de projection d'eau d'arrosage (18), disposés au-dessus du tambour de filtrage (6), et montés de préférence sur une rampe d'arrosage (17) parallèle à l'axe de rotation (16).

5. Dispositif de déshydratation selon la revendication 4, caractérisé en ce qu'il comporte à l'intérieur du tambour de filtrage (6) une rigole de récupération (19), pour recevoir l'eau d'arrosage, rigidement fixée au tube d'arrivée des gadoues (1), et dont la sortie (20) traverse la paroi de l'extrémité inférieure (10) du tambour de filtrage (6).

6. Dispositif de déshydratation selon l'une des revendications 1 à 5, caractérisé en ce que le tube d'arrivée des gadoues (1) comporte, à proximité de son extrémité inférieure et à l'intérieur du tambour de filtrage (6), des fentes de débit radiales (12) pour les gadoues à traiter, ces fentes étant de préférence dirigées vers le bas, et limitées par une cloison interne (21).

7. Dispositif de déshydratation selon l'une des revendications 4 à 6, caractérisé en ce que la cloison d'obturation interne (21) du tube d'arrivée des gadoues (1) est située à l'intérieur du tambour de filtrage (6), et que la rigole de récupération (19) qui reçoit l'eau d'arrosage débouche dans le tube (1) à travers des ouvertures radiales de celui-ci, en aval de la cloison d'obturation (21) pour permettre l'écoulement de l'eau par le tube (1) qui débouche hors du tambour (6) à travers la paroi de l'extrémité inférieure de celui-ci.

8. Dispositif de déshydratation selon l'une des revendications 1 à 7, caractérisé en ce que la structure du tambour de filtrage (6) comporte des tiges (23) parallèles à l'axe du tambour et sur lesquelles est tendu un tissu filtrant ou une toile filtrante (9), et que les éléments de la rampe hélicoïdale (11) sont fixés par des vis ou des rivets au tissu filtrant (9) et/ou aux tiges longitudinales (23).

FIG.1

FIG.2

FIG.3

7